# EUROPEAN PATENT SPECIFICATION

(11) **EP 0 516 388 B1**
(45) Date of publication and mention of the grant of the patent: **05.03.1997**
(21) Application number: 92304785.6
(22) Date of filing: 27.05.1992
(51) Int. Cl.: B64D 27/26, F02C 7/20

(54) **Detachable turbofan engine assembly**
Abtrennbare Bläsertriebwerkseinheit
Ensemble turboréacteur à soufflante séparable

(30) Priority: 28.05.1991 US 708263
(43) Date of publication of application: 02.12.1992
(73) Proprietor: GENERAL ELECTRIC COMPANY, Schenectady, NY 12345 (US)
(72) Inventor: Antuna, Eugene Jesus, Springdale, Ohio 45246 (US); Keck, Donal Frederick, Fairfield, Ohio 45014 (US)
(74) Representative: Lupton, Frederick

(56) References cited:
- EP-A- 0 453 360
- GB-A- 2 069 427
- GB-A- 2 202 588
- GB-A- 2 219 046
- US-A- 4 044 973
- US-A- 4 147 029

## Description

The present invention relates to a detachable turbofan engine assembly. More particularly, the present invention relates to an assembly for removing substantially intact the inner portion of the engine so that no disconnection of shafts or intricately aligned components is necessitated.

Turbofan gas turbine engines generally include a core engine coupled in driving relationship to a forward mounted fan module. The fan module, in a high-bypass ratio engine, includes a large diameter single stage fan and a multiple stage intermediate pressure compressor or booster. The fan is surrounded by a fan casing supported by a plurality of structural members which are, in turn, supported on a casing surrounding the booster. The core engine includes a high pressure compressor, a combustor and a multi-stage turbine for extracting energy from combustion gases exiting the combustor for driving the compressors and fan.

Mounting of such high-bypass engines on an aircraft generally requires one or more structural supports which connect the engine to a structural member, sometimes referred to as a strut or pylon, on a wing or fuselage, depending upon the mounting location. The structural supports extend through an aerodynamic cowling, sometimes referred to as a nacelle, and couple to the engine casing. Coupling may be to the fan casing (or shroud) and to the casing surrounding the turbine. In general, some form of structural yoke is attached to the engine casing and the structural supports attach to the yoke.

As gas turbine engines have become more powerful and larger, a concern has developed with handling and transporting of such engines. In particular, engines are now being developed with fans and fan casings having diameters in the range of 3.7 metres (twelve feet). Transporting of such engines by air or ground is not practical with current commercial aircraft and over-the-road transportation guidelines. Accordingly, it is desirable to provide a method of assembly and disassembly of such engines which permits transport without exceeding aircraft or ground transport size limitations.

The problems associated with handling and transporting of such large engines extends beyond shipments to the installation, removal, and handling of the engines in aircraft servicing. It is therefore further desirable to provide an engine assembly such that, in servicing of such engines, problems associated with such large diameter fans are overcome.

GB-A-2,202,588 poses one answer to such problems in which the engine has a split cowl to enable inner engine removal while in GB-A-2,219,046 fan blades must be removed prior to removal of the core engine axially through the rear engine casing.

### SUMMARY OF THE INVENTION

Accordingly, the present invention seeks to allow for the disassembly of a large turbofan engine without the need of radical disassembly of the inner engine components.

The present invention also seeks to allow for the disassembly of a large turbofan engine without the need of breaking or disconnecting shafts located in the inner portion of the engine.

Still further the present invention seeks to allow for the disassembly of a large turbofan engine which makes the transportation of engine parts more easily accomplished.

According to the invention, there is provided a detachable turbofan engine assembly connectable to an aircraft through a pylon, said assembly having an outer engine portion and an inner engine portion, said outer engine portion including a plurality of fan outlet guide vanes, a fan casing supported on said outlet guide vanes and an air inlet for directing air into said fan casing; and said inner engine portion including a plurality of fan blades operatively coupled to a core engine which includes a booster compressor stage, a combustor stage and a turbine stage, said assembly further comprising a hinged thrust reverser operable for accessing said inner engine portion and a hinged fan cowling operable for accessing said outer engine portion; a thrust link and forward and aft mounts for connecting said inner engine portion to the pylon attached to the aircraft; a booster compressor casing enclosing the booster stage; a plurality of fan outlet guide vane support members coupled between said booster casing and said outer core engine portion, said booster casing forward of said support member having a larger diameter than at said support members; means for releasably connecting each of said fan outlet guide vanes to a radially outer end of a corresponding one of said support members at a radial location defining a circumferential coupling joint having a diameter greater than a forward end of said booster stage; and, fan blade removing means for removing the fan blades from the core engine and thereafter axially separating the core engine from said outer engine portion such that the booster compressor stage of said core engine passes through the outlet guide vanes when said core engine is separated from said outer engine portion, said booster stage being an integral part of said core engine.

In one form, beginning with an engine mounted on an aircraft pylon in an under-wing configuration, a hinged fan cowling is opened to allow easier access to the outer portion of the engine. The fan cowling may be connected to the pylon and remain on the aircraft or be removed using a conventional A-frame hoist. A hinged D-duct type thrust reverser is opened to provide access to the aft portion of the engine. The reverser preferably is coupled to the pylon so that it can remain on the aircraft. A dolly/engine cradle is positioned under the engine and attached to the engine at forward and aft engine mounts. The engine is then uncoupled from the pylon, electrical and hydraulic lines released, and the engine and attached cradle lowered onto the dolly and removed from the aircraft.

Once removed from the aircraft, the engine can be disassembled for transport by first removing the inlet. A conventional A-frame may be utilized for this purpose. Thereafter, a two-piece fan spinner is removed to provide access to the retaining mechanism for the fan blades and platforms. After removing the fan blades and platforms, the acoustic panels are removed to provide access to bolts at the front of the hub of the outlet guide vanes (OGV). These bolts are removed to release OGV's from the OGV hub. A fan case dolly is positioned under the fan case during the final releasing steps to support the fan case which is thereafter removed from the engine. A protective cover is preferably placed over the fan disk and booster after removal of the fan case. Finally, the exhaust nozzle is removed and the engine is ready for transport to an overhaul facility.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawings, wherein:
FIG. 1 is a simplified partial cross-sectional drawing of an exemplary gas turbine engine;
FIG. 2 is a simplified schematic side view illustration of the engine assembly of the present invention;
FIG. 3 is a close-up, simplified schematic illustration of the rotor and booster regions of the present invention;
FIG. 4 is a close-up schematic illustration of the front engine mount of the present invention; and
FIG. 5 is a perspective illustration which illustrates the thrust reverser and fan cowling of the present invention.

When referring to the drawings, it is understood that like reference numerals designate identical or corresponding parts throughout the several views.

### THE DETAILED DESCRIPTION OF THE INVENTION

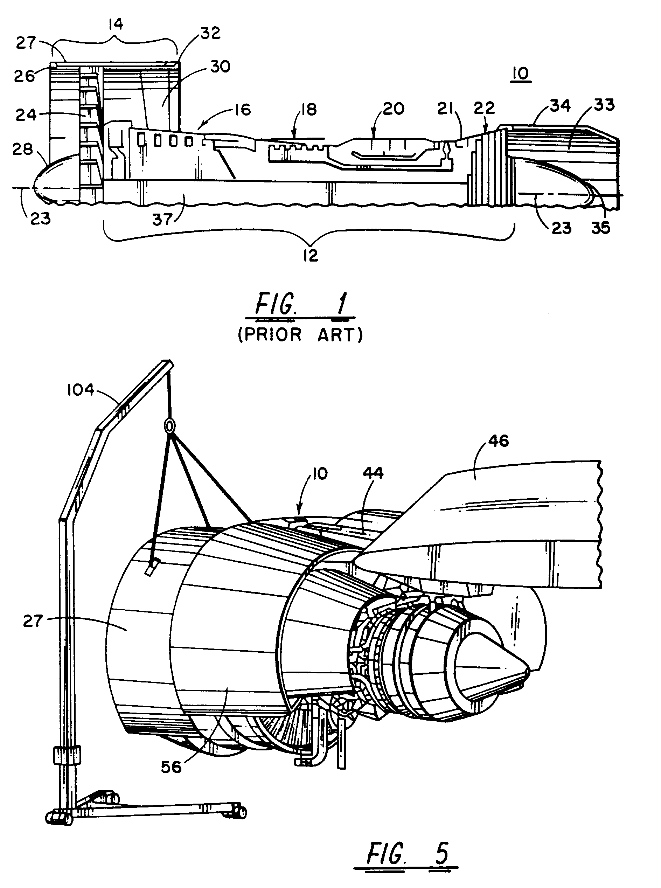

Referring first to FIG. 1, there is shown a partial cross-sectional drawing of an exemplary high-bypass ratio gas turbine engine 10 having a core engine portion indicated at 12 and a stator or fan portion indicated at 14. The core or engine portion 12 may be referred to as the rotor module. The rotor module or core engine 12 includes an intermediate pressure compressor or booster stage 16, a high pressure compressor stage 18, a combustor stage 20, a high pressure turbine stage 21, and a low pressure turbine stage 22 all aligned on an engine centerline 23. The core engine 12 further includes fan blades 24 and the spinner assembly 28. The fan portion 14 comprises fan cowling 27 and fan casing 26. The fan cowling 27 surrounds the fan casing 26 and radially encloses the fan portion of the engine 10.

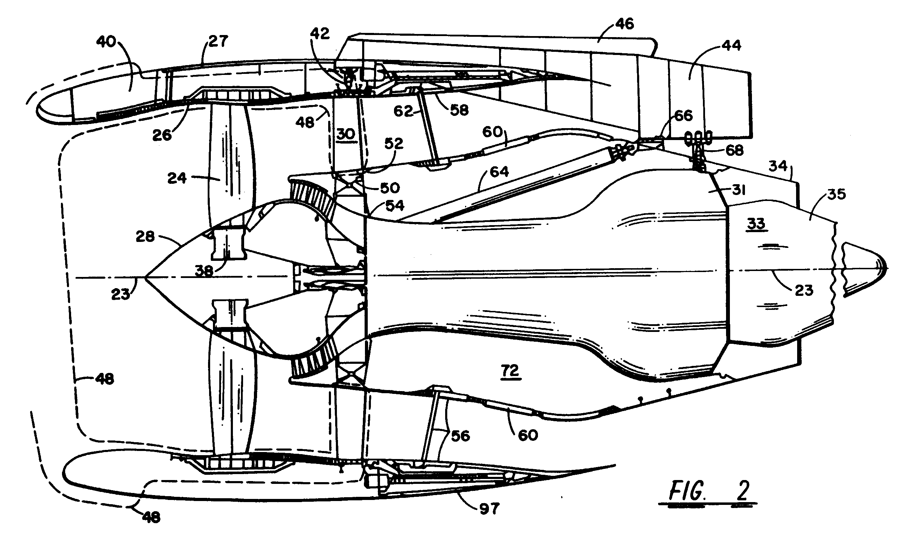

The fan spinner assembly 28 located forward of the fan blades 24 connects to a rotor assembly 38 (shown in FIG. 2), rotor assembly 38 being a part of the core engine 12. To the aft of fan blades 24 is located a plurality of circumferentially spaced outlet guide vanes or fan frame struts 30 which are a part of the fan portion 14. The outlet guide vanes 30 connect the engine core 12 to the fan portion of the engine 10 and provide structural support. At the rear of engine 10 is located primary nozzle 33 which includes an outer member 34 and an inner member 35. A fan shaft 37 driven by turbine stage 22 extends through the engine and is coupled in driving relationship with booster stage 16. Fan shaft 37 turns fan blades 24 via fan rotor assembly 38 (shown in FIG. 2).

As will be apparent from FIG. 1, handling of the engine 10 is a major problem for very large diameter fan blades 24. While it is possible to remove the blades 24, the practice in the art is to treat the blades 24, booster stage 16, and fan case 26 as a unitary module. Some engines are constructed with a two-piece fan shaft separable aft of the booster stage 16 approximately along the line 23. These engines are identified as split fan engines. Assembly and\or disassembly of split fan engines is complicated since it is difficult to attach the fan forward shaft and the fan mid shaft properly. In such fan split methods of separating an engine, the forward module includes the fan case 26, structural outlet guide vanes 30, fan spinner assembly 28, fan blades 24, along with fan rotor 38, booster stage 16 and the forward portion of shaft 37.

Thus, it has not been practical to separate the fan module and large external components for the core engine to facilitate handling. Furthermore, it is not desirable to separate an engine where such separation includes a rotating interface since such an interface may involve bearings or critical alignments.

Turning now to FIG. 2, a simplified schematic illustration of the present invention's engine assembly 10, which is similar to FIG. 1, shows an inlet 40 and fan cowling 27 located at the extreme front of the engine 10, the circumferential shape of the inlet forming an air passage by which air can enter the engine. To the aft of inlet 40 is fan case 26 which may be connected to fan cowling 27. Fan case 26 surrounds the fan blades 24 which are located radially inward therefrom. To the aft of fan blades 24 lie the fan outlet guide vanes (OGV's) 30 whose distal end portions in the outward radial direction are connected to fan casing 26. In addition, the front engine mount 42 connects to the wing pylon 44 which is attached to aircraft wing 46. Broken line 48 of FIG. 2 indicates the outer portion of engine 10 and includes the inlet 40, fan casing 26 and fan outlet guide vanes 30.

The radially inward distal end portion of each fan outlet guide vane 30 is attached to fan outlet guide vane support member 50 and attached thereto by means of bolts 52. Support member 50 connects to booster casing 54 which surrounds the booster area of the engine.

To the aft of fan cowling 27 and fan outlet guide vanes 30 is located a D-duct type thrust reverser 56 which includes a fan portion 58, a core portion 60 and links 62. The links 62 extend circumferentially around core portion 60. Located radially inward from core portion 60 of thrust reverser 56 is thrust link 64 which is attached at one end to pylon 44 at location 66, location 66 being to the aft of thrust reverser 56. The other end of thrust link 64 is connected to booster case 54 by means of brackets (not shown) which extend circumferentially around booster case 54. To the aft of location 66 is rear engine mount 68 which connects pylon 44 to a frame 31 on core engine 12.

The inner portion 72 of the engine 10 may be defined as that portion of the engine extending from the spinner assembly 28 to the primary nozzle 33 which is located radially inward of the thrust reverser 56. The inner portion of the engine does not include the fan outlet guide vanes 30 which have been defined to be a part of the outer portion of the engine as they are inside broken line 48 of FIG. 2.

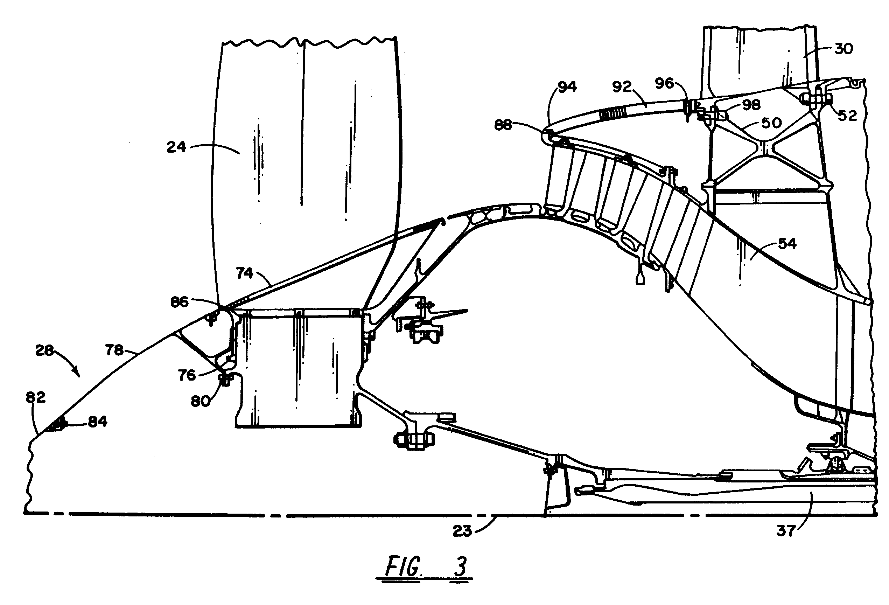

FIG. 3 is an enlarged, partial cross-sectional illustration of the fan blade and OGV attachment portion of the present invention and shows fan blade 24 connected to blade platform 74. The blades 24 are secured to rotor assembly 38 by means of anti-clank spring 76. Aft spinner 78 is connected to rotor assembly 38 by means of bolt 80 and forward spinner 82 is connected to aft spinner 78 by means of bolt 84. Pin 86 connects the blade platform 74 to rotor assembly 38.

Acoustic panels 92 are connected to the booster casing 54 by means of a tongue and groove slip joint 94. The acoustic panels are also connected to support 50 by bolts 96. The fan outlet guide vanes 30 are connected to support 50 by bolts 52 and 98.

The fan cowling 27 and thrust reverser 56 of the present invention are both hinged and divided into bifurcated assemblies which allow easy access to inside engine components when open. Such hinged cowling and thrust reversers are well known and appreciated by those in the art. U.S. Patent 3,541,794 to Johnston et al. is an example of a hinged and bifurcated thrust reverser. The respective half sections of the fan cowling and reverse thruster are pivotally attached to the pylon which extends from the aircraft wing. The respective half sections of the fan cowling and reverse thruster are secured in a closed position by latching means. The location of the latching means of thrust reverser 56 is indicated at 97 (FIG.2). A secured latched position is of course necessitated during times of engine operation. However, if access to the inner engine is desired, the respective half sections of the fan cowling 27 and thrust reverser 56 can be unlatched and rotated upward to afford access to the entire length of the engine.

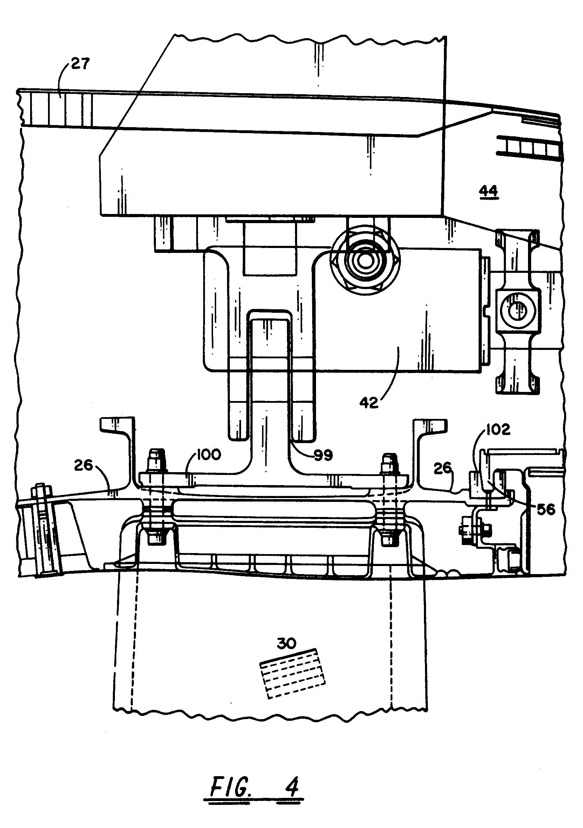

FIG. 4, is an enlarged, partial illustration of the front engine mount 42 adjacent a radially outer end of an OGV 30. The front engine mount 42 is connected to pylon 44 and forms a clevis joint 99 with support member 100, support member 100 being connected to the outlet guide vanes 30 and fan casing 26. Immediately aft of member 100 there is an annular tongue and groove joint 102 connecting the thrust reverser 56 to the fan casing 26.

With reference to FIG. 5, a simplified schematic illustration of an engine in the process of being removed or attached is presented showing an open thrust reverser 56 and fan cowling 27, both being pivotally attached to pylon 44. However, as indicated by the presence of A-frame type hoist 104, the fan cowling 27 may be removed from the engine rather than remaining on the pylon during engine installation or removal. Assuming for purpose of discussion that the engine 10 is to be removed from the aircraft for service, the hinged fan cowling 27 and thrust reverser 56 are opened to the configuration shown in FIG. 5. An engine cradle and dolly assembly (not shown) of a type well known in the art but which is specifically designed to fit the engine 10 is rolled under the engine and the cradle raised into a receiving position. The cradle is attached to the engine prior to disconnecting the engine from the pylon. The engine is disconnected from the pylon by removing the bolts at the forward and aft mounts 42 and 68. Thrust link 64 is also disconnected from pylon 44 at location 66. Finally, the electrical and hydraulic connections at the aircraft interface junction box (not shown) are disconnected freeing the engine from the aircraft. The cradle and engine are then lowered onto the dolly and rolled to an engine disassembly location.

For engine disassembly, the inlet 40 may be, but is not necessarily, removed using another A-frame type hoist similar to hoist 104. Thereafter, the forward spinner 82 is removed from the engine assembly 10 by removing bolts 84. The aft spinner 78 is removed by removing bolts 80 from the rotor assembly 38. The fan blade platforms 74 are removed after removing retaining bolts or pins 86. The fan blades 24 can be removed after removing the anti-clank spring 76. The acoustic panels 92 are removed by removing bolts 96 and separating tongue and groove slip joint 94. This latter step provides access to the bolts 98 connecting the outlet guide vanes 30 to the engine. Disconnection of the radially inward side of the fan OGV's 30 can be completed by disconnecting bolts 52 from the support 50. The fan case 26 and the still connected OGV's 30 are supported on another dolly/cradle and can be separated from the engine following the above described steps. Thereafter, the exhaust nozzle 33 may be removed, a protective cover (not shown) placed over the fan disk and booster and the engine is ready for transport to an overhaul facility.

The foregoing detailed description has been intended to be illustrative and non-limiting. Many changes and modifications are possible in light of the above teachings. Thus, it is understood that the invention may be practiced otherwise than as specifically described herein and still be within the scope of the appended claims.

## Claims

1. A detachable turbofan engine assembly (10) connectable to an aircraft (46) through a pylon (44), said assembly having an outer engine portion (48) and an inner engine portion (72), said outer engine portion including a plurality of fan outlet guide vanes (30), a fan casing (26) supported on said outlet guide vanes and an air inlet (40) for directing air into said fan casing; and said inner engine portion including a plurality of fan blades (24) operatively coupled to a core engine (12) which includes a booster compressor stage (16), a combustor stage (20) and a turbine stage (21,22), said assembly further comprising a hinged thrust reverser (56) operable for accessing said inner engine portion (72) and a hinged fan cowling (27) operable far accessing said outer engine portion (48); thrust link (64) and forward (42) and aft (68) mounts for connecting said inner engine portion to the pylon attached to the aircraft; a booster compressor casing (54) enclosing the booster stage (16); a plurality of fan outlet guide vane support members (50) coupled between said booster casing and said outer core engine portion, said booster casing forward of said support member having a larger diameter than at said support members; means (52) for releasably connecting each of said fan outlet guide vanes to a radially outer end of a corresponding one of said support members at a radial location defining a circumferential coupling joint having a diameter greater than a forward end of said booster stage; and, fan blade removing means (76) for removing the fan blades from the core engine and thereafter axially separating the core engine from said outer engine portion such that the booster compressor stage of said core engine passes through the outlet guide vanes when said core engine is separated from said outer engine portion, said booster stage being an integral part of said core engine.

2. The engine assembly according to claim 1 wherein said fan cowling (27) and said thrust reverser (65) are connected to the pylon (44).

3. The engine assembly according to claim 1 wherein said plurality of fan blades (24) in said engine assembly comprise a plurality of separately removable fan blades and said inner engine portion (72) includes said booster stage (16) and all rotating engine elements aft of said fan blades.

## Patentansprüche

1. Lösbare Turbofan-Triebwerksanordnung (10), die durch einen Pylon (44) mit einem Flugzeug (46) verbindbar ist, wobei die Anordnung einen äußeren Triebwerksabschnitt (48) und einen inneren Triebwerksabschnitt (72) aufweist, wobei der äußere Triebwerksabschnitt mehrere Fan-Auslaßfuhrungsschaufeln (30), ein Fangehäuse (26), das auf den Auslaßführungsschaufeln gehaltert ist, und einen Lufteinlaß (40) enthält zum Richten von Luft in das Fangehäuse (26); und wobei das innere Triebwerksgehäuse mehrere Fan-Schaufeln (24) aufweist, die operativ mit einem Kerntriebwerk (12) verbunden sind, das eine Booster- bzw. Zusatz-Verdichterstufe (16), eine Brennkammerstufe (20) und eine Turbinenstufe (21, 22) enthält, wobei die Anordnung ferner einen angelenkten Schubumkehrer (56), der für einen Zugang zu dem inneren Triebwerksabschnitt (72) betätigbar ist, und eine angelenkte Fan-Verkleidung (27) aufweist, die für einen Zugang zu dem äußeren Triebwerksabschnitt (48) betätigbar ist; eine Schubverbindung (64) und vordere (42) und hintere (68) Befestigungen zum Verbinden des inneren Triebwerksabschnittes mit dem Pylon, der an dem Flugzeug befestigt ist; ein Booster- bzw. Zusatz-Verdichtergehäuse (54), das die Booster-Stufe (16) umgibt; mehrere Fan-Auslaßführungsschaufel-Halterungsteile (50), die zwischen dem Booster-Gehäuse und dem äußeren Kerntriebwerksabschnitt verbunden sind, wobei das Booster-Gehäuse vor dem Halterungsteil einen größeren Durchmesser als an den Halterungsteilen hat; Mittel (52) zum lösbaren Verbinden von jeder der Fan-Auslaßführungsschaufeln mit einem radialen äußeren Ende von einem entsprechenden der Halterungsteile an einer radialen Stelle, die eine Umfangskopplungsverbindung mit einem größeren Durchmesser als ein vorderes Ende von der Booster-Stufe aufweist; und eine Fanschaufel-Entfernungseinrichtung (76) zum Entfernen der Fanschaufeln aus dem Kerntriebwerk und zum anschließenden axialen Trennen des Kerntriebwerkes von dem äußeren Triebwerksabschnitt, so daß die Booster-Verdichterstufe des Kerntriebwerkes durch die Auslaßführungsschaufeln hindurchpasst, wenn das Kerntriebwerk von dem äußeren Triebwerksabschnitt getrennt wird, wobei die Booster-Stufe ein integraler Teil des Kerntriebwerkes ist.

2. Triebwerksanordnung nach Anspruch 1, wobei die Fanverkleidung (27) und der Schubumkehrer (65) mit dem Pylon (44) verbunden sind.

3. Triebwerksanordnung nach Anspruch 1, wobei die mehreren Fanschaufeln (24) in der Triebwerksanordnung mehrere getrennt lösbare Fanschaufeln aufweisen und der innere Triebwerksabschnitt (72) die Booster-Stufe (16) und alle umlaufenden Triebwerkselemente hinter den Fanschaufeln enthält.

## Revendications

1. Ensemble séparable (10) de réacteur à double flux, pouvant être couplé à un avion (46) par l'intermédiaire d'un mât (44), ledit ensemble comprenant une partie de moteur extérieure (48) et une partie de moteur intérieure (72), ladite partie de moteur extérieure comprenant une pluralité d'aubes directrices (30) de sortie de soufflante, un carénage de soufflante (26) supporté sur lesdites aubes directrices de sortie, et une entrée d'air (40) servant à diriger de l'air dans ledit carénage de soufflante, et ladite partie de moteur intérieure comprenant une pluralité de pales de soufflante (24) opérationnellement couplées à un générateur de gaz (12) qui contient un étage de compresseur de gavage (16), un étage de chambre de combustion (20) et un étage de turbine (21, 22), ledit ensemble comprenant en outre un inverseur de poussée (56) articulé, actionnable pour accéder à ladite partie de moteur intérieure (72) et un capot de soufflante (27) articulé, actionnable pour accéder à ladite partie de moteur extérieure (48), une bielle de liaison de poussée (64) et des supports avant (42) et arrière (68) servant à coupler ladite partie de moteur intérieure au mât fixé à l'avion, un carter (54) de compresseur de gavage enfermant l'étage de compresseur de gavage (16), une pluralité d'organes (50) de support des aubes directrices de sortie de la soufflante, couplés entre ledit carter de compresseur de gavage et ladite partie de moteur extérieure, ledit carter de compresseur de gavage ayant un diamètre plus grand en avant dudit organe de support qu'au niveau desdits organes de support, un moyen (52) pour coupler de manière détachable chacune desdites aubes directrices de sortie de la soufflante à une extrémité radialement extérieure de l'un correspondant desdits organes de support, en un emplacement radial qui définit une liaison d'accouplement circonférentiel ayant un diamètre plus grand que l'extrémité avant dudit étage de compresseur de gavage, et un moyen (76) de démontage des pales de soufflante, servant à retirer les pales de la soufflante du générateur de gaz et à séparer ensuite axialement le générateur de gaz de ladite partie de moteur extérieure, de telle sorte que l'étage de compresseur de gavage dudit générateur de gaz passe à travers les aubes directrices de sortie quand ledit générateur de gaz est séparé de ladite partie de moteur extérieure, ledit étage de compresseur de gavage faisant partie intégrante dudit générateur de gaz.

2. Ensemble de réacteur selon la revendication 1, dans lequel ledit capot de soufflante (27) et ledit inverseur de poussée (65) sont couplés au mât (44).

3. Ensemble de réacteur selon la revendication 1, dans lequel ladite pluralité de pales de soufflante (24) dudit ensemble de réacteur comprend une pluralité de pales de soufflantes séparément amovibles et ladite partie de moteur intérieure (72) comprend ledit étage de compresseur de gavage (16) et tous les éléments du moteur qui tournent en arrière desdites pales de soufflante.
